# EUROPÄISCHE PATENTANMELDUNG

(11) **EP 1 253 453 A1**
(43) Veröffentlichungstag der Anmeldung: **30.10.2002**
(21) Anmeldenummer: 02008955.3
(22) Anmeldetag: 22.04.2002
(51) Int. Cl.: G02B 6/42

(54) **Koppler für optische Signale und Verfahren zum Setzen mechanischer Führungselemente von Kopplern**

(30) Priorität: 27.04.2001 DE 10120694
(71) Anmelder: SIEMENS AKTIENGESELLSCHAFT, 80333 München (DE)
(72) Erfinder: Griese, Elmar, Dr., 33100 Paderborn (DE)

(57) **Zusammenfassung**

Die Erfindung betrifft einen Koppler für optische Signale, der eine erste und eine zweite Koppelfläche (23a,23b) aufweist. Der Koppler enthält ein Lichtleiterbündel (22) mit Lichteintritts- und Austrittsflächen (23a,23b), auf denen optisch wirksame Bereiche vorhanden sind. Die optisch wirksamen Bereiche bilden dort auftreffende Lichtmuster gemäß einer vorbestimmten Abbildung auf die jeweils andere Koppelfläche ab. Auf den Koppelflächen sind mechanische Führungselemente vorgesehen (31,32), deren Position der gleichen Abbildung gehorchen, die auch für die Abbildung der optisch wirksamen Bereiche gelten. Außerdem betrifft die Erfindung ein Verfahren zum Setzen mechanischer Führungselemente von Kopplern.

## Beschreibung

Es ist bereits bekannt, datenverarbeitenden Anlagen untereinander mit Lichtleitern zu koppeln. Im Innern der Anlagen, insbesondere den dortigen elektronischen Schaltungen, haben sich optische Verbindungen noch nicht durchgesetzt. Diese liegt insbesondere daran, daß optische Leiter nicht mit derselben ausgereiften Technologie hergestellt und angeschlossen werden können wie elektrische Leiter.

Eine Lösungsmöglichkeit besteht darin, optische Leiter in die Leiterplatte einzubetten. Der Anschluß an die optischen Leiter wird dadurch gelöst, daß in einem zusätzlichen Fertigungsgang nahe den Enden der optischen Fasern Schlitze in die Leiterplatte gefräst werden, welche die Enden der optischen Leiter freilegen. Dabei werden bereits während der Herstellung neben den optischen Leitern Präzisions-Hohlzylinder mit eingebettet, die mit durchgetrennt werden und als Führungselemente dienen. Der Anschluß erfolgt dann, indem Koppler in die gefrästen Ausnehmungen eingesetzt werden. Diese Koppler besitzen Führungsstifte, die in die Hohlzylinder eingreifen und so eine präzise Positionierung erlauben. Die Hohlzylinder und Führungsstifte sind für MT-Steckverbinder von Lichtleiter-Kabeln zu Geräten oder Schaltungen bekannt. Dabei werden die Führugsstifte normalerweise leicht konisch gefertigt, damit eine Zentrierwirkung erfolgen kann.

In EP 393 829 sind Koppler beschrieben, welche die optischen Signale um 90° und damit von einer Richtung parallel zur Oberfläche einer Leiterplatte in eine Richtung senkrecht zur Oberfläche umlenken. Derartige Koppler werden in die Leiterplatte eingesetzt. Danach werden dann über die Koppler Bauelemente plaziert, die nach unten, also senkrecht zur Plattenoberfläche zu dieser hin, die optischen Signale abstrahlen bzw. empfangen. Diese Bauelemente müssen jedoch dann mit einer Genauigkeit positioniert werden, die um eine Größenordnung besser sein muß, als sie Plazierautomaten bislang beherrschen.

Der vorliegenden Erfindung liegt daher die Aufgabe zugrunde, diese Koppler so zu gestalten, daß die notwendige hohe Präzision beim Anschluß sowohl an die Lichtleiter als auch an die Bauelemente mit geringem Aufwand erreicht wird.

Erfindungsgemäß wird diese Aufgabe durch einen Koppler mit den in Anspruch 1 angegebenen Merkmalen und durch Verfahren mit den in Anspruch 8 und 9 angegebenen Merkmalen gelöst. Vorteilhafte Weiterbildungen der Erfindung sind in den abhängigen Ansprüchen angegeben.

Entsprechend einer bevorzugten Ausführungsform werden in den Kopplern faseroptische Bündel verwendet, deren aktive Fläche wesentlich größer als die der Lichtleiter ist und die ein Muster auf der aktiven Fläche auf der anderen Seite reproduzieren. Nunmehr können Führungsstifte in den Koppler eingesetzt werden, wobei lediglich deren gegenseitiger Abstand hochgenau sein muß. Die absolute Position relativ zu den faseroptischen Bündeln ist in diesem Schritt unkritsch, solange gewährleistet ist, dass der oder die Wellenleiter später vollständig vor den aktiven Flächen der Faserbündel liegen. An die so vorbereiteten Koppler wird nun eine optische Referenz angeschlossen, die Lichtpunkte auf den aktiven Bereichen der faseroptischen Bündel erzeugt und bei denen die Abstände zu den Führungshülsen genau justiert oder ausgemessen wurde. Die Lichtpunkte erscheinen nun auf der anderen Koppelfläche, d.h. den Austrittsflächen der faseroptischen Bündel. Dort werden sie beispielsweise mit elektronischen Kameras vermessen und daraus die Sollpositionen der Führungszylinder auf der zweiten Fläche bestimmt. Die anzukoppelnden Bauelemente weisen dann wiederum Führungsstifte auf, die in die im vorigen Schritt eingesetzten Führungshülsen passen.

Am einfachsten sind gleichmäßige optische Faserbündel, bei denen ein auf die Eintrittsfläche projiziertes Bild kongruent an der Austrittsfläche erscheint. Diese stellen in den meisten Fällen gleichzeitig die beste Lösung dar. Eine lineare Verzerrung in einer oder zwei Dimensionen, d.h. eine Dehnung oder Streckung, sind jedoch gleichfalls möglich. Große Abstände der Lichtleiter in der Leiterplatte können so zusammengedrängt werden. Die Führungsstifte werden entweder mit demselben Faktor zusammengedrängt oder linear abgebildete. Im letzteren Falle ist die Abbildungsfunktion stückweise linear.

Möglich sind auch nichtlineare Abbildungen. Voraussetzung ist jedoch auf jeden Fall Stetigkeit und Ein-Eindeutigekeit (Bijektivität). Ferner ist es notwendig, daß die Abbildung vorbestimmt ist.

Damit können die Koppler unabhängig von der jeweiligen Leiterplatte und den anzukoppelnden Bauelementen in getrennter Fertigung erstellt werden, in die vorbereiteten Leiterplatten eingesetzt werden und sodann die Bauelemente aufgesetzt werden. Alle Handhabungen an den Leiterplatten können mit der dort üblichen Genauigkeit ausgeführt werden, da die Führungselemente für die abschließende Feinpositionierung sorgen. Lediglich bei der Herstellung der Koppler ist eine größere Genauigkeit vonnöten, und dies auch nur bei dem zweiten Schritt des Einsetzens der Führungshülsen. Die Führungsstifte können der Herstellung der Koppler, d.h. der Plazierung der faseroptischen Bündel und dem Umspritzen mit einem Füllmaterial, bereits mit produziert werden, sofern dieser Schritt eine Genauigkeit zuläßt, die besser ist als die Ausdehnung der faseroptischen Bündel.

Die Erfindung wird nachfolgend an Ausführungsbeispielen anhand der Zeichnung näher erläutert. Es zeigt
- Fig. 1: eine Aufsicht auf eine Leiterplatte, in der ein Koppler gemäß der Erfindung verwendet werden kann,
- Fig. 2: eine Seitenansicht der Leiterplatte nach Fig. 1 in Richtung des Pfeiles A,
- Fig. 3: einen Koppler gemäß der Erfindung,
- Fig. 4: eine alternative Ausführungsform eines Kopplers.

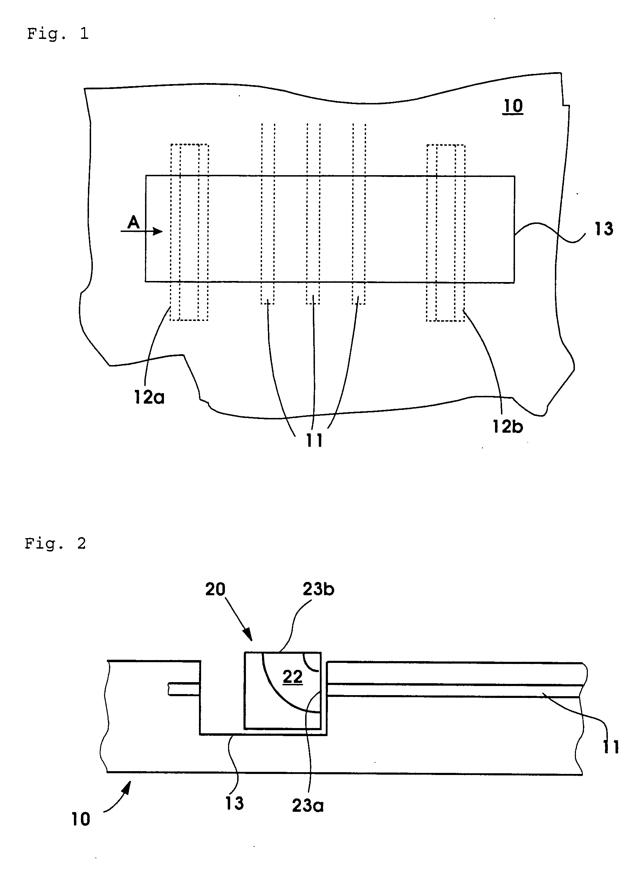

In Fig. 1 ist eine Leiterplatte 10 in Aufsicht gezeigt, in der optische Leiter 11 eingebettet sind. In gleicher Richtung wie die optischen Leiter sind in derselben Ebene mechanische Führungselemente 12a, 12b, hier als Hohlzylinder ausgebildet, eingebettet. Der Abstand der optischen Leiter untereinander und zu den Führungselementen wird, beispielsweise durch Einlegen in (nicht gezeigte) vorbereitete Kammstrukturen, die mit eingebettet werden, mit der notwendigen hohen Genauigkeit erreicht. Diese Genauigkeit ist ein Bruchteil des Durchmessers der Lichtleiter.

Die Lichtleiter 11 und die Führungselemente 12a, 12b werden nach dem Pressen der Leiterplatte durch eine Ausnehmung 13, bevorzugt durch einen Fräsvorgang in Richtung des Pfeiles A, freigelegt.

In den damit entstehenden rechteckigen Hohlraum werden umlenkenden Koppler 20 eingesetzt, wie in Fig. 2 skizziert.

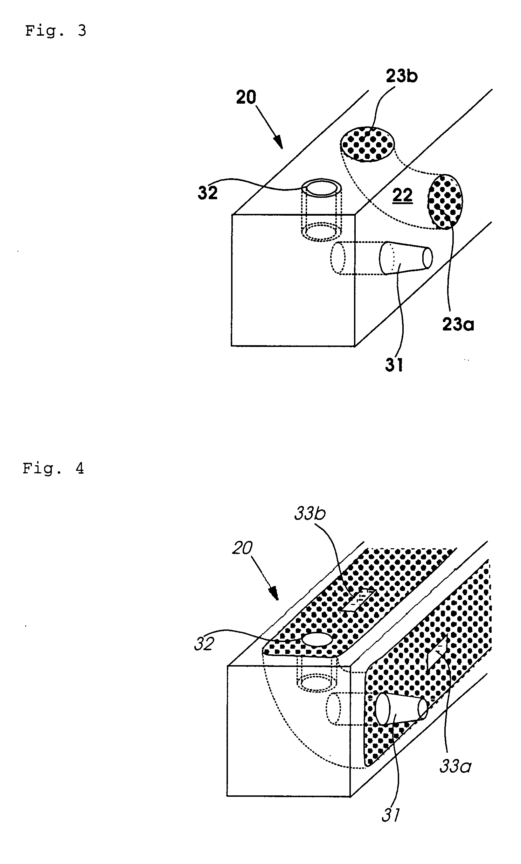

Ein Koppler ist in Fig. 3 gezeigt. Er besteht aus einem hier quaderförmigen Träger 20, in den Lichtleiterbündel 22 eingebettet sind und die Ein- bzw. Austrittsflächen 23a und 23b aufweisen. Davon sind - nicht gezeigt - in der Regel mehrere in Längsrichtung des Trägers vorgesehen. Am Anfang sind mechanische Führungselemente, hier ein Stift 31 und eine Öffnung 32, vorgesehen. Ein zweites Paar - nicht gezeigt - ist am Ende des Trägers 20 vorgesehen. Die beiden Führungsstifte 31 bilden die Referenzen auf der einen Ebene, die beiden Führungslöcher 32 die auf der anderen Ebene. Bevorzugt liegen die Mittelpunkte der Ein- bzw. Austrittsflächen 23a, 23b der Lichtleiter 22 auf der Verbindungslinie der Führungselemente 31, 32 miteinander und haben zueinander ungefähr gleichen Abstand.

Die Herstellung erfolgt, indem zunächst die Lichtleiterbündel 22 fixiert und umgossen werden. Danach werden die Stifte 31 eingesetzt. Deren Abstand muß sehr genau eingehalten werden, damit eine gute Passung zu den in der Leiterplatte 10 befindlichen zugehörigen Hülsen 12a, 12b erreicht wird. Die relative Position zu den Eintrittsflächen 23a der Lichtleiter ist weniger kritisch, da deren Querschnitt den der Lichtleiter in der Leiterplatte wesentlich übersteigen sollte. Es ist lediglich zu erreichen, daß die Enden der Lichtleiter 11 in der Leiterplatte 10 nach dem Einsetzen vollständig auf der Eintrittsfläche 23a liegen, damit keine Lichtenergie verloren geht.

Bei der Erstellung der Führungslöcher sind zusätzliche Maßnahmen notwendig. Hierzu werden die mit den Führungsstiften versehenen Koppler an einen Referenzsender angeschlossen, wobei die Führungsstifte die Position vorgeben. Nunmehr werden in genau vorgegebenem Abstand zu den Führungsstiften Lichtpunkte von etwa dem Durchmesser der Fasern in der Leiterplattea auf die Eintrittsfläche 23a projiziert. Damit ergeben sich auf den Austrittsflächen 23b korrespondierende Lichtpunkte, die nunmehr optisch vermessen werden. Aus deren Position wird die Sollposition der Führungslöcher 32 erbmittelt. Vorzugsweise werden die Löcher dann mit Laser-Bohrern an den Sollpositionen eingebracht.

Besonders zweckmäßig ist die bevorzugte Ausgestaltung nach Fig. 4, bei der ein einziges großes Lichtleiter-Fasernbündel verwendet wird. In (gezeigt) oder neben (nicht gezeigt) dieses werden die Führungsstifte eingelassen. Deren Position ist unkritisch. Nunmehr werden wie vor in einer Meßeinrichtung Referenzlichtpunkte 33a erzeugt, deren korrespondierende Lichtpunkte 33b vermessen und danach die Lage der Führungshülsen bestimmt. Diese können insbesondere durch Laser mit der benötigten Genauigkeit auch in die Glasfaserbündel des Lichtleiters gebohrt werden.

## Patentansprüche

1. Koppler für optische Signale, der eine erste und eine zweite Koppelfläche aufweist,
- auf denen optisch wirksame Bereiche vorhanden sind, die dort auftreffende Lichtmuster gemäß einer vorbestimmten Abbildung auf die jeweils andere Koppelfläche abbilden,
- und auf denen mechanische Führungselemente vorgesehen sind, deren Position durch die vorbestimmte Abbildung bestimmt sind.

2. Koppler nach Anspruch 1, wobei die Koppelflächen senkrecht aufeinander stehen.

3. Koppler nach einem der vorherigen Ansprüche, wobei die Abbildung eine stückweis lineare Abbildung ist.

4. Koppler nach einem der vorherigen Ansprüche, wobei die Abbildung durch faseroptische Systeme erfolgt.

5. Koppler nach einem der vorherigen Ansprüche, wobei je zwei Führungselemente pro Fläche vorhanden sind und die Mittelpunkte der optisch wirksamen Bereiche auf der Verbindungslinie der Mittelpunkte der Führungselemente liegen.

6. Koppler nach einem der vorherigen Ansprüche, wobei die Führungselemente als Hülsen oder Stifte, bevorzugt in etwa zylindrisch, ausgebildet sind.

7. Koppler nach einem der vorherigen Ansprüche, wobei der Koppler im wesentlichen würfelförmig ist.

8. Verfahren zum Setzen mechanischer Führungselemente von Kopplern gemäß einem der Ansprüche 1 bis 7, bei dem
- an eine erste Koppelfläche, an der sich bereits Führungselemente befinden, ein mit komplementären Führungselementen versehener Referenz-Emitter angesetzt wird, der an vorbestimmter Position relativ zu den Führungselementen Licht emittiert,
- unmittelbar gegenüber einer zweiten Koppelfläche ein optischer Meßaufnehmer aktiviert wird, welcher die Position mißt, an der das an der ersten Oberfläche eintretende Licht austritt,
- aus der gemessenen Position des austretenden Lichts die Sollposition der mechanischen Führungselemente berechnet wird,
- die Führungselemente an der berechneten Sollposition unmittelbar eingesetzt werden oder
diese Sollpositionen markiert werden und die Führungselemente anhand dieser Markierungen eingesetzt werden.

9. Verfahren zum Setzen von mechanischen Führungselementen von Kopplern gemäß einem der Ansprüche 1 bis 7, bei dem
- auf eine zweite Koppelfläche großflächig Licht eingestrahlt wird,
- unmittelbar gegenüber einer ersten Koppelfläche ein weiterer optischer Meßaufnehmer aktiviert wird, welcher die Lage der Bereiche ermittelt, aus denen das in die zweite Koppelfläche eingestrahlte Licht austritt,
- aus der Lage der Bereiche die optimalen Positionen der Eintrittspunkte berechnet werden,
- mittels dieser Positionen in der ersten Koppelfläche Führungselemente gesetzt werden.

10. Verfahren nach Anspruch 9, wobei mehrere abgegrenzte optisch wirksame Bereiche vorhanden sind und die mechanischen Führungselemente diesen gemeinsam zugeordnet sind, und wobei die Sollposition aus mehr als zwei Positionen des austretenden Lichts zusammen bestimmt wird.
